# EUROPEAN PATENT SPECIFICATION

(11) **EP 0 562 837 B1**
(45) Date of publication and mention of the grant of the patent: **30.10.1996**
(21) Application number: 93302231.1
(22) Date of filing: 24.03.1993
(51) Int. Cl.: B23B 13/02

(54) **Automatic bar feeder**
Automatische Stangenzuführvorrichtung
Embarreur automatique

(30) Priority: 24.03.1992 JP 65812/92
(43) Date of publication of application: 29.09.1993
(73) Proprietor: IKURASEIKI SEISAKUSHO CO. Ltd., Shimodate-shi, Ibaraki-ken (JP)
(72) Inventor: Itoh, Takazou, Hachioji-shi, Tokyo (JP); Suzuki, Tatsuo, Shinshiro-shi, Aichi (JP); Natsume, Kimio, Hoi-gun, Aichi (JP); Nakamura, Yoshihiro, Shinshiro-shi, Aichi (JP)
(74) Representative: Smith, Philip Antony

(56) References cited:
- DE-B- 2 810 852
- PATENT ABSTRACTS OF JAPAN vol. 6, no. 246 (M-176)(1124) 4 December 1982 & JP-A-57 144 602 (IKURA SEIKI SEISAKUSHO K.K.) 7 Septemner 1982
- PATENT ABSTRACTS OF JAPAN vol. 14, no. 295 (M-990) 26 June 1990 & JP-A-20 95 501 (IKURA SEIKI SEISAKUSHO) 6 April 1990

## Description

The present invention relates to an automatic bar feeder and more particularly, to an automatic bar feeder which is able to reliably prevent the escape of a bar from a guide groove of a guide rail.

### Background Art

Automatic bar feeders, which are constructed so as to automatically feed bars to bar machining apparatuses, such as NC lathes and the like, are in wide use. Such automatic bar feeders are, in general, provided with a stock rack for holding a plurality of bars, a bar feeding member which presses the rear end of a bar toward a bar machining apparatus, a drive mechanism for driving the bar feeding member, and a control device for controlling the operation of these mechanisms.

Among this type of bar feeders, feeders are known which are constructed so as to suitably feed especially thin bars to a bar machining apparatus. For example, the automatic bar feeder disclosed in Japanese Patent Application 63-241932 (JP-A-2 095 501) filed by present applicant, is provided with a guide rail having a guide groove extending in the feeding direction of a bar, a base member or a frame on which this guide rail is mounted so that the bar within the groove is aligned with the processing axis of the bar machining apparatus, a bar supply device which successively supplies bars to the groove, and a bar feeding member which feeds the bar within the groove to the bar machining apparatus.

In such an automatic bar feeder, when the bar is rotated at a high speed by the bar machining apparatus, there is a tendency for the bar to escape from the groove or jump up out of the groove. In order to prevent such an escape of the bar from the groove, a pair of left and right shutter members extending longitudinally of the groove and constituting a shutter is disposed adjoining the upper surface of the guide rail, and the shutter members are adapted to open or close the upper part of the groove. Thus, the guide rail and the shutter form a closed guide path like a guide pipe, when the shutter members close the groove. On such an automatic bar feeder is based the preamble of independent claim 1.

However, a protruding portion for transmitting propelling force to the bar feeding member, which portion generally extends upwardly, is provided on the bar feeding member. For example, a feed rod, which is widely used as the bar feeding member, is provided at the backward end thereof with an upwardly protruding portion which is called a blade, and this blade is connected to a driving device for the feed rod, by means of a wire, rope, or chain. Such a blade must extend above the shutter members while the feed rod is located within the groove of the guide rail. Therefore, the left and right shutter members can not close completely, and thus a space allowing the blade to pass between the left and right shutter members has to be created. On the other hand, such a space between the shutter members would enable the bar to inadvertently escape through this space, in a case where the bar is extremely thin.

Further, the left and right shutter members are constructed as a solid and longitudinally elongated member-respectively. In such a member, warping, distortion or deformation in the central part thereof occurs relatively easily during use therof, which may cause a gap to be created between the shutter member and the upper surface of the guide rail, or between the right and left shutter members. It follows therefore that there is a possibility that the bar would be allowed to escape through the created gap.

### SUMMARY OF THE INVENTION

The principle object of the present invention is to provide an automatic bar feeder which is able to reliably prevent the inadvertent escape of a bar from the groove of the guide rail, without impeding the movement of the projecting portion of the bar feeding member.

In order to attain the above object, the present invention provides an automatic bar feeder, comprising:
a guide rail provided with a guide groove extending in a feeding direction of a bar, so that the bar within the groove is aligned with an axis of a bar machining apparatus;
shutter means defined by a pair of shutter members which are disposed so as to adjoin an upper surface of the guide rail and close the groove so as to prevent the escape of the bar from the groove;
bar supplying means for supplying the bar to the groove; and
a bar feeding member which is movable along the groove and feeds the bar within the groove to the bar machining apparatus, wherein the bar feeding member is provided with a protruding portion which transmits propelling force to the bar feeding member, wherein
each of said shutter members is divided into a plurality of shutter parts, each of the shutter parts being movable between a first position, in which an upper part of said groove is opened, and a second position in which the upper part of the groove is closed; and
a shutter opening means is provided, which moves all the shutter parts to the second position when said bar feeding member is in a position for initiation of bar feeding, wherein, when said protruding portion of the bar feeding member approaches one of pairs of said shutter parts, resulting from advancement of the bar feeding member, said shutter opening means allows said pair of shutter parts to move to the first position.

In accordance with the automatic bar feeder having the above construction, the pair of shutter members is divided transversely into the plurality of pairs of shutter parts, and each of the pairs of the shutter parts is opened stepwisely by means of the shutter opening means when the protruding portion of the bar feeding member approaches it, which bar feeding member is progressively advanced in accordance with a successive machining process. Accordingly, it is possible for each pair of the shutter parts to completely close the guide groove of the guide rail until the arrival of the protruding portion. Moreover, when the protruding portion reaches one of the pairs of shutter parts, the backward end of the bar, i.e., the forward end of the bar feeding member has already reached another pair of the shutter parts, or has already reached the bar machining apparatus. Therefore, the partial opening of the shutter means as described above, makes it possible to prevent the problem of the bar escaping from the groove.

Furthermore, the length of each shutter part, into which the shutter member is divided, is significantly less than that of the conventional shutter member. Accordingly, as warps, distortion or deformation of the shutter member are greatly reduced, a large gap is prevented from developing between the shutter member and the guide rail, and thus, there will be no risk of the bar escaping through the gap.

Other advantages and further objects of embodiments of the present invention will become apparent to those skilled in the art after a careful consideration of the following specification and accompanying drawings wherein:

### BRIEF DESCRIPTION OF THE DRAWINGS

Fig. 1 is an overall plan view showing an embodiment of an automatic bar feeder embodying the present invention;
Figs. 2a and 2b are enlarged cross sectional views taken along the line A-A of Fig. 1;
Fig. 3 is an enlarged partial plan view of the automatic bar feeder showing its shutters in their closed position;
Fig. 4 is an enlarged partial side view of the automatic bar feeder showing the shutters together with their opening and closing mechanism.

### DETAILED DESCRIPTION OF THE PREFERRED EMBODIMENT

Hereinbelow, an embodiment of the present invention will be explained in detail with reference to the drawings.

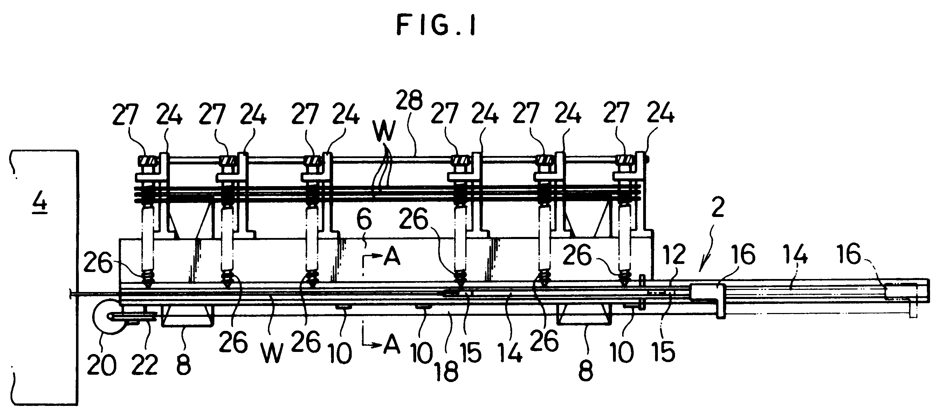

Fig. 1 is an overall plan view showing an embodiment of an automatic bar feeder according to the present invention. In Fig. 1, a depiction of shutter members has been omitted for the purpose of simplicity.

An automatic bar feeder 2 is supported on stands 8, 8, which are extendable in a vertical direction, and is provided with a frame 6 which extends horizontally along the feeding direction of a bar W to a NC lathe 4. A guide rail 12 is mounted on a side surface of the frame 6 by means of brackets 10, and the guide rail 12 extends along the longitudinal direction of the frame 6.

In the guide rail 12, a feed rod 14, which defines the bar feeding member, is disposed in such a manner that the rod 14 is movable along the guide rail 12. The feed rod 14 is adapted to hold the backward end of a bar W to be fed to the lathe 4 and press the bar W toward the lathe 4. Chucking means 15, which has an interior diameter substantially identical to the outer diameter of the bar W, is provided at the forward end of the feed bar 14 for holding the backward end of the bar W.

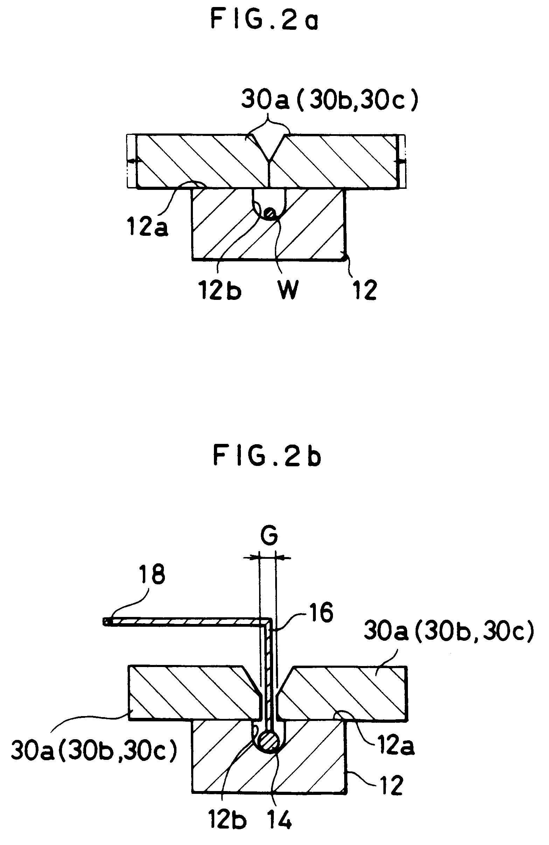

An upwardly projecting portion 16 in the form of a plate, which is a so-called blade, is provided at the backward end of the feed rod 14, and this upwardly projecting portion 16 extends vertically upward from the backward end of the feed rod 14, as shown in Fig. 2(b). One end of a rope 18 is connected to the upwardly projecting portion 16. This rope 18 is disposed above the guide rail 12 and extends forwardly parallel to the guide rail 12. Further, the rope 18 extends around the outer circumference of a pulley 22 disposed at the forward end of the frame 6 and depends therefrom. A weight 20 is secured to the lower end of the rope 18, and the gravity of the weight 20 acts on the backward end of the projecting portion 16 through the rope 18. Accordingly, in accordance with the descending motion of the weight 20, the feed rod 14 moves in a forward direction along the guide rail 12.

The inner ends of a plurality (in the present embodiment, six) of brackets 24, which extend in the lateral direction of frame 6, are mounted on the other side surface of the frame 6. A screw member 26 having a helical groove formed on the surface thereof is supported rotatably by each of the brackets 24. The width of this helical groove is formed so as to be slightly larger than the outer diameter of the bar W, so as to be able to support the bar W within the groove. Furthermore, the lead end of each screw member 26 is positioned above the guide rail 12, and the base end thereof integrally supports a worm wheel gear 27 of a worm gearing.

A rotatable shaft 28, which extends in the longitudinal direction of the frame 6, is rotatably supported at the outer end of the brackets 24. The shaft 28 is driven by means of a driving mechanism which is not depicted in Fig. 1. The rotation of the shaft 28 is transmitted to the worm wheel gears 27 of the screw members 26 through worm gears (not shown), which are affixed to the shaft 28. Accordingly, the plurality of the screw members 26 rotate simultaneously in concert with the rotation of the shaft 28 by means of the operation of the driving mechanism for the shaft 28.

Fig. 2 is an enlarged cross sectional view taken along the line A-A of Fig. 1.

As shown in Fig. 2(a), the guide rail 12 is provided with a groove 12b which is opened in an upper surface 12a thereof. The groove 12b has cross-sectional dimensions so that it is able to contain the bar W and the feed rod 12, respectively. The upper surface 12a of the guide rail 12 forms a horizontal plane, and is in contact with the lower surfaces of a pair of left and right shutter members 30 (a pairs of shutter parts 30a, 30b, 30c). The pair of shutter members 30 constitutes shutter means. Prior to the insertion of a bar W into the groove 12b, the left and right shutter members 30 are moved as shown in Fig. 2(b) so as to be spaced apart from one another, thereby the groove 12b being opened. When the bar W has been inserted into the groove 12b as shown in Fig. 2(a), the left and right shutter members 30 are moved toward each other, so that the opposed side surfaces thereof are brought into contact with each other, and thus the groove 12b is completely closed.

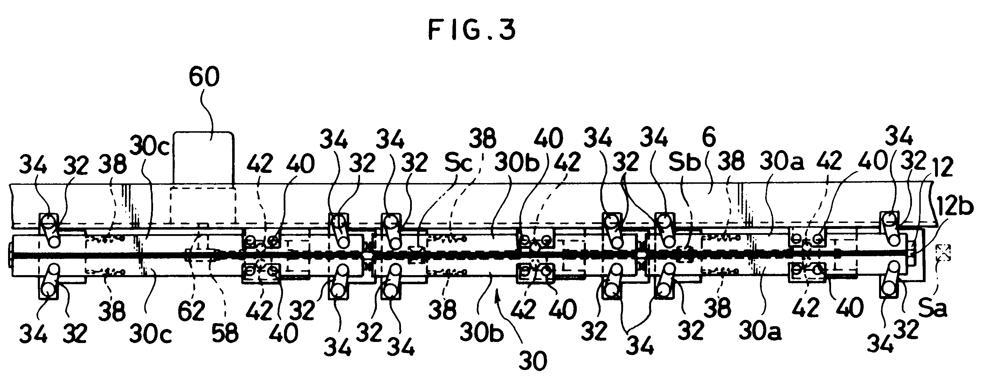

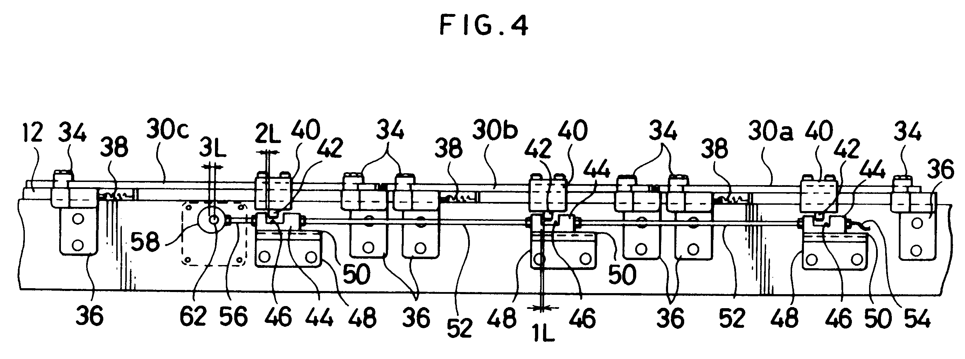

Fig. 3 is a partially enlarged plan view of the bar feeder 2 showing the condition in which the shutter members 30 are closed, and Fig. 4 is a partially enlarged side view of the bar feeder 2 showing the opening and closing mechanism of the shutter members 30.

As shown in Figs. 3 and 4, each of the left and right shutter members 30 are divided into three parts 30a, 30b, and 30c, respectively. Each of shutter parts 30a-30c is articulately connected to support pins 34 by means of a pair of links 32, and each support pin 34 is mounted on a support bracket 36 which is fixed to the frame 6. Tension springs 38 for energizing the shutter parts 30a-30c toward their closed positions are provided on the shutter parts 30a-30c. One end of the tension spring 38 is secured to the support bracket 36, while the other end thereof is secured to the corresponding shutter part 30a-30c.

Respective carriers 40 for the shutter parts 30a-30c are attached to each shutter part 30a-30c. The carrier 40 is disposed at the intermediate area of each of the shutter parts 30a-30c, and is attached thereon so as to envelop each shutter part 30a-30c from its outside. As shown in Fig. 4, a cam follower pin 42 depends from the lower surface of each carrier 40. A pin actuator 44 is disposed beneath a pair of the carriers 40. The pin actuator 44 is provided with a concave groove 46 which can engage with a pair of the pins 42. Each of the concave grooves 46 extends in a direction perpendicular to the guide rail 12, and receives a pair of the pins 42 so that the groove 46 permits the pins 42 to move in the lateral direction of the guide rail 12. Each of the pin actuators 44 is supported by a bracket 48 which is mounted on the frame 6. A guide recess 50 extending parallel to the guide rail 12 is formed in an upper surface of each of the brackets 48. Each of the guide recesses 50 receives a lower end portion of one of the pin actuators 44, and guides the pin actuators 44 parallel to the guide rail 12.

The pin actuators 44 are interconnected to each other by means of rods 52, which are disposed parallel to the guide rail 12 and movable parallel to the guide rail 12. A cable 54 for simultaneously moving all the pin actuators 44, is connected to the pin actuator 44 which is closest to the rear end of the bar feeder 2. A cam follower rod 56, which projects in a forward direction from the pin actuator 44 positioned closest to the front end of the bar feeder 2. An eccentric cam 58 in the form of a disk is fixed to an output shaft 62 of a motor 60, and the cam 58 is disposed in front of the cam follower rod 56. The outer circumferential surface of the eccentric cam 58 is in sliding contact with the lead end of the cam follower rod 56.

Each of the pin actuators 44 and the eccentric cam 58 are disposed in a predetermined positional relationship. That is to say, the pin actuator 44 of the pair of shutter parts 30a, which is located closest to the rear end of bar feeder 2, is positioned so that the forward side wall surface of the concave groove 46 is in contact with the corresponding pair of follower pins 42. Further, the pin actuator 44 of the pair of shutter parts 30b, which is in an intermediate area of the bar feeder 2, is positioned so that the forward side wall surface of the concave groove 46 is spaced a distance L apart from the received pair of follower pins 42. still further, the pin actuator 44 for the pair of shutter parts 30c, which is located closest to the front end of the bar feeder 2, is positioned so that the forward side wall surface of the concave groove 46 is spaced apart from the corresponding pair of follower pins 42 by a distance 2L. Each of these positional relationships of the pin actuators 44 is set by adjusting of the length of the rod 52. Furthermore, the center of the eccentric cam 58 is displaced by a distance 3L with respect to the axis of the output shaft 62.

As shown in Fig. 3, the bar feeder 2 is provided with three position sensors Sa, Sb and Sc for detecting the position of the feed rod 14. The position sensor Sa is disposed so as to be activated when the upwardly projecting portion 16 of the feed rod 14 approaches the pair of shutter parts 30a, the position sensor Sb is disposed so as to be activated when the upwardly projecting portion 16 approaches the pair of shutter parts 30b, and the position sensor Sc is disposed so as to be activated when the upwardly projecting portion 16 approaches the pair of shutter parts 30c. These position sensors are electrically connected to a control unit (not shown) of the bar feeder 2.

In the following, the operation of the bar feeder 2 will be explained.

First, the cable 54 is drawn rearward by means of a cable traction device (not shown), and all the pin actuators 44 are moved in a backward direction a distance of at least 3L along the guide recesses 50. All the follower pins 42 are pressed and biased in a rearward direction by means of the respective forward wall surfaces of the concave grooves 46 of the pin actuators 44, and all the pairs of shutter parts 30a-30c are energized in a rearward direction. Each of the shutter parts 30a-30c is pivoted against the tension spring 38 in an outward direction about the support pin 34. Thus, the pairs of shutter parts 30a-30c in contact with the upper surface 12a of the guide rail 12 slide laterally outwardly as shown by the arrow in Fig. 2a, and therefore, the groove 12b is opened.

A plurality of bars W, which are to be fed to a lathe 4, are placed in the helical grooves of the screw members 26, so that the plurality of bars W are stocked on the screw members 26 at a predetermined pitch. The feed rod 14 is, as shown by the phantom line in Fig. 1, positioned at the backward end portion of the guide rail 12. In this condition, by means of the activation of the driving mechanism, the plurality of screw members 26 are rotated, thus allowing the bars W in the helical grooves to be moved from the outer ends of the screw members 26 to the inner ends thereof. The bar W located at the closest to the groove 12b of the guide rail 12, falls off from the inner ends of the screw members 26 into the groove 12b. Then, a material gripping mechanism (not shown) allows the backward end of the bar W in the groove 12 to be gripped by the chucking means 15 of the feed rod 14.

Thereafter, the cable 54 is loosened, and the restorative force of the tension springs 38 allows all the pin actuators 44 to be swung inwardly. Each of the pairs of shutter parts 30a-30c moves is such a manner that left and right shutter parts abut each other on the upper surface 12a of the guide rail 12, and thus, the inner side surfaces of these shutter parts come into mutual contact, thereby completely closing the groove 12b to form a closed guide path having no longitudinal opening space like a guide pipe. Then, the weight 20 is permitted to descend, and the feed rod 14 is advanced toward the lathe 4. The bar W is pressed by this feed rod 14, and progressively is fed to the lathe 4.

As cutting or grinding is carried out on the forward end portion of the bar W by means of the lathe 4 and severing of products from the forward end portion of the bar W is repeatedly performed by the lathe 4, the bar W is gradually shortened. In correspondence with this, the feed rod 14 is successively advanced in order to feed the bar W to the lathe 4.

When the upwardly protruding portion 16 disposed at the backward end of the feed rod 14 approaches the pair of shutter parts 30a, the position sensor Sa is activated. When the position sensor Sa is activated, the control unit (not shown) of the bar feeder 2 drives the motor 60, and the eccentric cam 58 is rotated through a predetermined angle. This rotational angle is set so that the eccentric cam 58 moves the cam follower rod 56 in a rearward direction by a distance L. By such a rotation of the eccentric cam 58, the three pin actuators 44 are moved together in a rearward direction by a distance L. Only the most rearward pin actuator 44 is pressed against the corresponding pair of the cam follower pins 42 so as to move these pins 42 in a rearward direction. As a result, only the pair of shutter parts 30a is pivoted in a rearward and outward direction, so that an opening space above the groove 12b is formed between the left and right shutter parts 30a, thereby permiting passage of the upwardly projecting portion 16 to pass , therethrough. This space is indicated by reference G in Fig. 2b.

As the bar W is further shortened and the feed rod 14 is further advanced, the upwardly protruding portion 16 approaches the next pair of shutter parts 30b, and the position sensor Sb is activated. The control unit of the bar feeder 2 drives the motor 60, and the eccentric cam 58 is rotated through a predetermined angle. This angle is, again, set so that the eccentric cam 58 moves the cam follower rod 56 in a rearward direction by a distance L, and the three pin actuators 44 are moved together in a rearward direction by this distance L. Upon this rotation of the eccentric cam 58, in addition to the most rearward pin actuator 44 pressing the corresponding pair of cam follower pins 42 in a backward direction, the pin actuator 44 of the pair of shutter parts 30b presses the corresponding pair of cam follower pins 42 in a backward direction by a distance L. As a result, the left and right shutter parts 30b are pivoted in a rearward and outward direction, and a space G above the groove 12b is formed between the shutter parts 30b so as to permit the upwardly protruding portion 16 to pass therethrough.

When the bar W is further shortened and the upwardly protruding portion 16 approaches the third pair of shutter parts 30c, the position sensor Sc is activated. The control unit of the bar feeder 2 drives the motor 60, and the eccentric cam 58 is further rotated through a predetermined angle. As a result, the cam follower rod 56 is again moved in a rearward direction by a distance L. Upon this rotation of the eccentric cam 58, the most forward pin actuator 44 presses the corresponding pair of cam follower pins 42 in a rearward direction, the respective shutter parts 30c are pivoted in a rearward and outward direction, and a space G above the groove 12b is formed bettween the shutter parts 30c so as to permit movement of the upwardly projecting portion 16 therethrough.

As explained above, in the bar feeder 2 of the present embodiment, the pair of left and right shutter members 30 is divided into the three pairs of shutter parts 30a-30c. The pairs of shutter parts 30a-30c are sequentially pivoted between an open position in which the groove 12b of the guide rail 12 is opened, and a closed position in which this groove 12b is completely closed. When the feeding operation of the bar W by the feed rod 14 is initiated, all the pairs of shutter parts 30a-30c are in close contact with each other so as to completely close the groove 12b, thereby forming a kind of a guide pipe having no longitudinal opening space. When the upwardly protruding portion 16 approaches the pair of shutter parts 30a as a result of the advancement of the feed rod 14, the pair of shutter parts 30a is opened; when the upwardly protruding portion. 16 approaches the pair of shutter parts 30b, the pair of shutter parts 30b is opened; and when the upwardly protruding portion 16 approaches the pair of shutter parts 30c, the pair of shutter parts 30c is opened.

Accordingly, in the above bar feeder 2, until the arrival of the upwardly protruding portion 16, it is possible to completely close the groove 12b of the guide rail 12 by means of the shutter. Moreover, in accordance with the stepwise partial opening of the shutter as set forth above, the bar W is always rotated within the completely closed groove 12b during the cutting process of the lathe 4, so that there is no risk of the bar W escaping from the groove 12b. This is because, when the upwardly protruding portion 16 reaches the shutter parts 30a, the rear end portion of the bar W has already reached or passed the shutter parts 30b; when the upwardly protruding part 16 reaches the shutter parts 30b, the rear end portion of the bar W has already reached or passed the shutter parts 30c; and when the upwardly protruding portion 16 reaches shutter parts 30c, the rear end portion of the bar W has already reached the lathe 4.

Still further, the shutter parts 30a-30c each have a length which is 1/3 that of the conventional shutter members, and therefore, warping, distortion and deformation thereof is prevented from occurring, whereby a gap owing to the warping, distortion or deformation of the shutter members 30 is prevented from being created between the shutter member 30 and the guide rail 12. Thus, escape of the bar W from the groove 12b through the gap can be avoided.

## Claims

1. An automatic bar feeder, comprising:
a guide-rail (12) provided with a guide groove extending in a feeding direction of a bar, so that the bar within the guide groove is aligned with an axis of a bar machining apparatus;
shutter means defined by a pair of shutter members (30) which are disposed so as to adjoin an upper surface of the guide rail (12) and close the guide groove so as to prevent the escape of the bar from the guide groove;
bar supplying means for supplying the bar to the guide groove; and
a bar feeding member (14) which is movable along the guide groove and feeds the bar within the guide groove to the bar machining apparatus, wherein the bar feeding member is provided with a protruding portion which transmits propelling force to the bar feeding member, characterized in that
each of said shutter members (30) is divided into a plurality of shutter parts (30a, 30b, 30c), each of the shutter parts being movable between a first position, in which an upper part of said guide groove (12b) is opened, and a second position in which the upper part of the guide groove is closed; and
shutter opening means is provided, which moves all the shutter parts to the second position when said bar feeding member is in a position for initiation of bar feeding, wherein, when said protruding portion (16) of the bar feeding member (14) approaches one of pairs of said shutter parts, resulting from advancement of the bar feeding member, said shutter opening means allows said pair of shutter parts to move to the first position.

2. An automatic bar feeder as claimed in claim 1, wherein said shutter means includes at least three pairs of shutter parts (30a, 30b, 30c), which are in sliding contact with an upper surface (12a) of said guide rail (12), and one of said shutter parts in a pair has an inside surface which can be brought into contact with an inside surface of the other shutter part thereof.

3. An automatic bar feeder as claimed in claim 1 or 2, wherein said bar feeding member is a feed bar which is moved within said guide groove, said protruding portion is a blade which extends upwardly from said guide groove, and said supplying means includes a plurality of screw members (26) each having a helical groove formed on a surface thereof.

4. An automatic bar feeder as claimed in any one of claims 1 through 3, wherein said guide rail (12) is provided with a horizontal upper surface (12a), side guide groove has cross-sectional dimensions such that it is able to contain the bar(W) and said bar feeding member (14) respectively, said upper surface of the guide rail is in sliding contact with the respective lower surfaces of said shutter parts, and each of the shutter parts in a pair is pivotable relative to the guide rail so as to be spaced apart from each other.

5. An automatic bar feeder as claimed in any one of claims 1 through 4, wherein said shutter part is connected to a tension spring (38) for energizing the shutter part toward said second position.

6. An automatic bar feeder as claimed in any one of claims 1 through 5, wherein said shutter opening means includes a follower (42) provided on each of said shutter parts, and actuating means (44) for the followers is provided so as to move the followers selectively.

7. An automatic bar feeder as claimed in claims 6, wherein said actuating means is driven by driving means (60) through a cam (58) and a cam follower (56).

8. An automatic bar feeder as claimed in any one of claims 1 through 7, wherein said shutter opening means includes position sensing means (Sa, Sb, Sc) for detecting the position of said bar feeding member and control means for controlling the operation of said shutter opening means so that-each pair of said shutter parts is stepwisely opened as said protruding portion of the bar feeding member approaches said pair of shutter parts.

## Patentansprüche

1. Automatische Stangen-Fördervorrichtung mit:
einer Führungsschiene (12), die mit einer Führungsnut versehen ist, die sich in einer Zuführrichtung einer Stange erstreckt, so daß die Stange in der Führungsnut auf eine Achse einer Stangenbearbeitungsvorrichtung ausgerichtet ist,
Verschlußmitteln, die von einem Paar von Verschlußelementen (30) gebildet werden, die so angeordnet sind, daß sie an einer oberen Fläche der Führungsschiene (12) anstoßen und die Führungsnut verschließen, um zu verhindern, daß die Stange aus der Führungsnut entweicht, Stangenzufuhrmitteln zum Zuführen der Stange zu der Führungsnut, und
einem Stangenvorschubelement (14), welches entlang der Führungsnut bewegbar ist und die Stange in der Führungsnut der Stangenbearbeitungsvorrichtung zuführt, wobei das Stangenvorschubelement mit einem vorstehenden Abschnitt versehen ist, der auf das Stangenvorschubelement eine Antriebskraft überträgt,
dadurch gekennzeichnet, daß
Jedes der Verschlußelemente (30) in eine Vielzahl von Verschlußteilen (30a, 30b, 30c) unterteilt ist, wobei jedes dieser Verschlußteile zwischen einer ersten Position, in der ein oberer Teil der Führungsnut (12b) offen ist, und einer zweiten Position bewegt werden kann, in der der obere Teil der Führungsnut geschlossen ist, und daß ein Verschlußöffnungsmittel vorgesehen ist, das alle Verschlußteile in die zweite Position bewegt, wenn sich das Stangenvorschubelement in einer Position befindet, in der der Stangenvorschub eingeleitet wird, wobei dann, wenn sich der vorstehende Abschnitt (16) des Stangenvorschubelements (14) einem der Paare der Verschlußteile nähert, was eine Folge der Vorwärtsbewegung des Stangenvorschubelements ist, das Verschlußöffnungsmittel es erlaubt, daß sich dieses Paar von Verschlußteilen in die erste Position bewegt.

2. Automatische Stangen-Fördervorrichtung nach Anspruch 1, bei der das Verschlußmittel mindestens drei Paare von Verschlußteilen (30a, 30b, 30c) umfaßt, die sich in einem Gleitkontakt mit einer oberen Fläche (12a) der Führungsschiene (12) befinden, und eines dieser Verschlußteile in einem Paar eine Innenfläche aufweist, die in Kontakt mit einer Innenfläche des anderen Verschlußteils davon gebracht werden kann.

3. Automatische Stangen-Fördervorrichtung nach Anspruch 1 oder 2, bei der das Stangenvorschubelement eine Vorschubstange ist, die in der Führungsnut bewegt wird, wobei der vorstehende Abschnitt ein Flügel ist, der sich ausgehend von der Führungsnut nach oben erstreckt, und das Zufuhrmittel eine Vielzahl von Schraubenelementen (26) umfaßt, die jeweils eine schraubenförmige Nut aufweisen, die auf einer Oberfläche davon ausgebildet ist.

4. Automatische Stangen-Fördervorrichtung nach einem der Ansprüche 1 bis 3, bei der die Führungsschiene (12) mit einer horizontalen oberen Fläche (12a) versehen ist, wobei die Seitenführungsnut derartige Querschnittsabmessungen aufweist, daß sie in der Lage ist, Jeweils die Stange (W) und das Stangenvorschubelement (14) aufzunehmen, wobei sich die obere Fläche der Führungsschiene in Gleitkontakt mit den jeweiligen unteren Flächen der Verschlußteile befindet, und jedes der Verschlußteile in einem Paar relativ zu der Führungsschiene verschwenkbar ist, so daß sie voneinander beabstandet werden können.

5. Automatische Stangen-Fördervorrichtung nach einem der Ansprüche 1 bis 4, bei der das Verschlußteil mit einer Spannfeder (38) verbunden ist, um das Verschlußteil in Richtung auf die zweite Position zu bewegen.

6. Automatische Stangen-Fördervorrichtung nach einem der Ansprüche 1 bis 5, bei der das Verschlußöffnungsmittel eine Kurvenrolle (42) umfaßt, die auf jedem der Verschlußteile vorgesehen ist, und ein Betätigungsmittel (44) für die Kurvenrollen vorgesehen ist, damit die Kurvenrollen wahlweise bewegt werden können.

7. Automatische Stangen-Fördervorrichtung nach Anspruch 6, bei der das Betätigungsmittel von Antriebsmitteln (60) über einen Nocken (58) und einen Nockenstößel (56) angetrieben wird.

8. Automatische Stangen-Fördervorrichtung nach einem der Ansprüche 1 bis 7, bei der das Verschlußöffnungsmittel Positionserfassungsmittel (Sa, Sb, Sc) zum Erfassen der Position des Stangenvorschubelements und Steuermittel zum Steuern der Betätigung der Verschlußöffnungsmittel umfaßt, so daß jedes Paar der Verschlußteile schrittweise geöffnet wird, wenn sich der vorstehende Abschnitt des Stangenvorschubelements dem Paar von Verschlußteilen nähert.

## Revendications

1. Appareil d'alimentation automatique en barres, comprenant :
un rail de guidage (12) ayant une gorge de guidage placée dans la direction d'avance d'une barre afin que la barre placée dans la gorge de guidage soit alignée sur un axe d'un appareil d'usinage de barres,
un dispositif obturateur délimité par deux organes obturateurs (30) qui sont disposés afin qu'ils soient adjacents à une surface supérieure du rail de guidage (12) et proches de la gorge de guidage et que la barre ne puisse pas s'échapper de la gorge de guidage,
un dispositif de transmission de la barre à la gorge de guidage, et
un organe (14) d'avance de barre qui est mobile le long de la gorge de guidage et qui fait avancer la barre dans la gorge de guidage vers l'appareil d'usinage de barres, l'organe d'avance de barre ayant une partie en saillie qui transmet une force de propulsion à l'organe d'avance de barre, caractérisé en ce que
chacun des organes obturateurs (30) est divisé en plusieurs parties (30a, 30b, 30c) d'obturateur, chacune des parties d'obturateur étant mobile entre une première position, dans laquelle une partie supérieure de la gorge de guidage (12b) est ouverte, et une seconde position, dans laquelle la partie supérieure de la gorge de guidage est fermée, et
un dispositif d'ouverture d'obturateur est disposé afin qu'il déplace toutes les parties d'obturateur vers la seconde position lorsque l'organe d'avance de barre est en position de début d'avance de barre, si bien que, lorsque la partie en saillie (16) de l'organe d'avance de barre (14) se rapproche de l'une des paires de parties d'obturateur, à la suite de l'avance de l'organe d'avance de barre, le dispositif d'ouverture d'obturateur permet un déplacement de la paire de parties d'obturateur vers la première position.

2. Appareil d'alimentation automatique en barres selon la revendication 1, dans lequel le dispositif obturateur comprend au moins trois paires de parties d'obturateur (30a, 30b, 30c) qui sont en contact glissant avec une surface supérieure (12a) du rail de guidage (12), et l'une des parties d'obturateur d'une paire a une surface interne qui peut être mise au contact d'une surface interne de l'autre partie d'obturateur de la paire.

3. Appareil d'alimentation automatique en barres selon la revendication 1 ou 2, dans lequel l'organe d'avance de barre est une barre d'avance qui est déplacée dans la gorge de guidage, la partie en saillie est une lame qui dépasse au-dessus de la gorge de guidage, et le dispositif de transmission comprend plusieurs organes à vis (26) ayant chacun une gorge hélicoïdale formée à une surface.

4. Appareil d'alimentation automatique en barres selon l'une quelconque des revendications 1 à 3, dans lequel le rail de guidage (12) possède une surface supérieure horizontale (12a), une gorge latérale de guidage a des dimensions en coupe telles qu'elle peut contenir la barre (W) et l'organe (14) d'avance de barre, la surface supérieure du rail de guidage est en contact glissant avec les surfaces inférieures respectives des parties d'obturateur, et chacune des parties d'obturateur d'une paire peut pivoter par rapport au rail de guidage afin que ces parties soient distantes l'une de l'autre.

5. Appareil d'alimentation automatique en barres selon l'une quelconque des revendications 1 à 4, dans lequel la partie d'obturateur est raccordée à un ressort de tension (38) destiné à déplacer la partie d'obturateur vers la seconde position.

6. Appareil d'avance automatique en barres selon l'une quelconque des revendications 1 à 5, dans lequel le dispositif d'ouverture d'obturateur comporte un toucheau (42) placé sur chacune des parties d'obturateur, et un dispositif (44) de manoeuvre des toucheaux est disposé afin qu'il déplace sélectivement les toucheaux.

7. Appareil d'alimentation automatique en barres selon la revendication 6, dans lequel le dispositif de manoeuvre est déplacé par le dispositif (60) d'entraînement par l'intermédiaire d'une came (58) et d'un toucheau (56) de came.

8. Appareil d'alimentation automatique en barres selon l'une quelconque des revendications 1 à 7, dans lequel le dispositif d'ouverture d'obturateur comprend un dispositif (Sa, Sb, Sc) de détection de position destiné à détecter la position de l'organe d'avance de barre, et un dispositif de commande du fonctionnement du dispositif d'ouverture d'obturateur afin que chaque paire de parties d'obturateur soit ouverte par pas lorsque la partie en saillie de l'organe d'avance de barre se rapproche de la paire des parties d'obturateur.
